# EUROPEAN PATENT APPLICATION

(11) **EP 1 143 348 A2**
(43) Date of publication of application: **10.10.2001**
(21) Application number: 01303284.2
(22) Date of filing: 06.04.2001
(51) Int. Cl.: G06F 17/21

(54) **Method for defining a data transformation specification**

(30) Priority: 07.04.2000 US 544972
(71) Applicant: Vitria Technology, Inc., Sunnyvale, CA 94086 (US)
(72) Inventor: Upton, Francis R., Oakland, CA 94610 (US)
(74) Representative: Gill, David Alan

(57) **Abstract**

A computer-implemented process for specifying instructions for transforming an input message into an output message including the steps of: generating a tree view of an input schema for the input message, generating a tree view of an output schema for the output message, and generating an expression tree from pre-existing processes for a field of the output schema specifying instructions for transforming data from the input message to data for the output message.

## Description

### BACKGROUND OF THE INVENTION

### Field Of The Invention

This invention relates to computer systems and, more particularly, to information processing systems that transform data from one form to another.

### History Of The Prior Art

Computer applications often need to use data prepared by different computer applications. For example, when a bill is paid by a company using a first accounts payable application, some of the information associated with that bill needs to be forwarded to a second general ledger application, to be recorded for the company's financial statements. It is possible that the first and second applications were provided by two different companies and that the exact format and content of the data representing the bill differ. For example, the first application may represent an account number as two data items: a department code of three characters and an account of up to four digits; while the second application represents an account number as a single data item of up to ten digits. To allow the account data from the first application to be used by the second application, the department code and account data items from the first application can be concatenated into the single ten digit account number data item when the data associated with the bill is forwarded to the second application.

However, if the data from the first application is transferred to a third application requiring yet another format for an account number, this solution may not work. To obviate this problem, instead of modifying the first application, the billing data from the first application may be intercepted and modified by an "interceptor" computer program not associated with either the first or second application. In this way, neither application need be modified; and, if either the first or the second application changes, only the interceptor program must change.

Large companies can have thousands of computer applications that must communicate data with each other. Because an interceptor program must be written for every pair of communicating applications, this could result in an unmanageable number of interceptor programs. To help alleviate this situation, general purpose software programs have been devised to transform data from one form to another. To further facilitate matters, standards have been created for various aspects of the representation of data.

Data that is exchanged between applications is broken into messages, each containing data items. In the above example, the data items associated with a bill (the amount, account number, date paid, vendor, and the like) collectively form a single message.

One can separate the content of a message into encoding and semantics. Encoding deals with the many issues associated with representing the data on the particular medium of exchange (which could be, for example, a punched card, magnetic disk, or a telephone wire). It also includes number and character representation, separation of the different data items in a single message, the mechanism for naming the data items, how characters are represented, and other issues necessary to convey the semantics of the message.

Nearly all aspects of message encoding are specified by means of standards. One of the most popular standards in this area is the Extensible Markup Language (XML) specification. This specification provides a method of encoding where data items can be named and structured into named groups.

Although data transformation software must deal with encoding issues, they are not important for the purpose of the present Invention and will not be discussed further. Only the semantic aspects of data transformation are considered.

The semantics are the meaning of the message. Semantics include the name of each of the data items, the order and structure in which the data items appear in the message, and the meaning of the values of each of the data items. The remainder of this description refers to a data item containing a single value as a "field." Fields in a message can be arranged in named groups called "containers." For example, a person's name can be represented as follows:

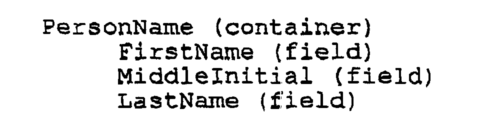

In this example, referring to the data item "PersonName" is a reference to the entire name. When there are hundreds and maybe thousands of data items associated with a message, grouping is necessary to easily examine and manipulate parts of the message. Containers can hold fields and other containers. Fields or containers may be repeated either a fixed or variable number of times. Consider the case of a message representing a customer that includes a history of all of the orders that customer has placed. Typically, this is represented by a container that holds the information associated with each order; and that container repeats for a variable number of occurrences. When a field or container can repeat, this is called a "sequence."

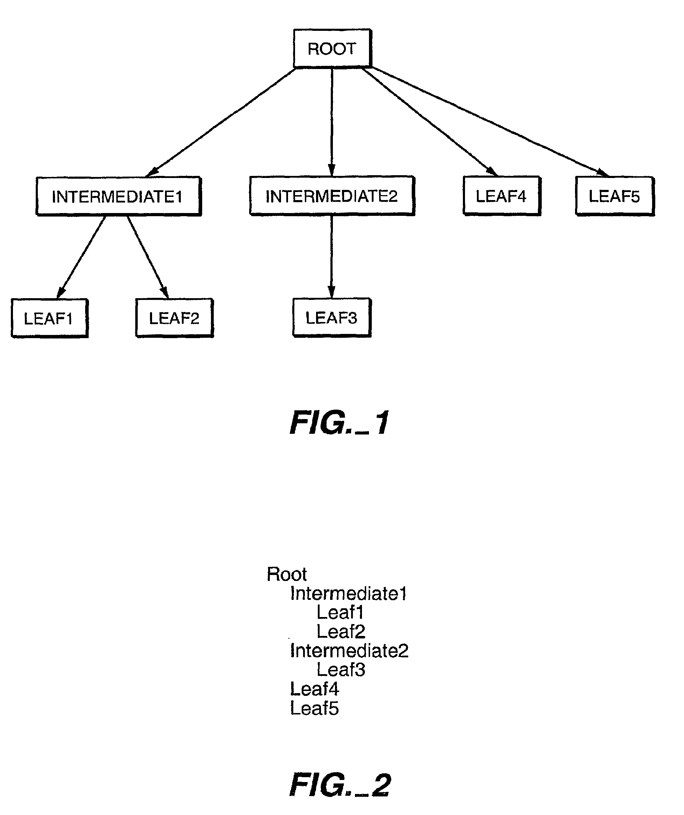

The definition of the content of a message is called a "schema" and is represented for the purpose of the present invention using a "tree." A tree is a method of relating multiple entities that are called "nodes." Each node has a single parent and may have zero or more children. The top most node, that is, the one node without a parent is called the "root." If a node has both a parent and one or more children, is it called an "intermediate." Finally, a node with no children is a "leaf." An example of a tree is illustrated in Figure 1. The root and intermediate nodes are containers (and possibly sequences), and the leaf nodes are fields.

For the purpose of a transformation definition, there is an input schema, which defines the input message and an output schema defining the output message. Here is an example of a simple schema:

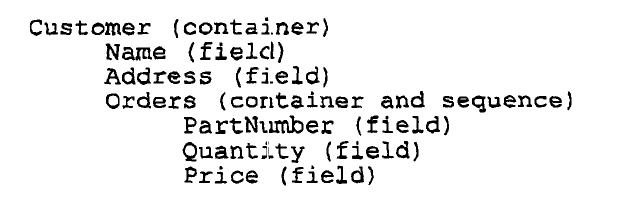

When referring to a field in the schema, the field name is normally qualified with its enclosing containers. In the above example, the PartNumber field would be referred to as Customer.Orders.PartNumber.

A transformation consists of the input and output schema and all of the rules that describe how to build the output message from the input message. Typically, a transformation processes a single input message producing a single output message. Transformations are capable, however, of processing one or more input messages producing one or more output messages.

There are several different types of transformations. One type is used for copying data from an input field with one name to an output field with a different name. A second type of transformation performs a function on an input field that alters it in some way and sets an output field to the result of that function. An example is converting a date from 23 Jun 1998 to 06/23/1998. A third type of transformation fabricates an output field either from multiple input fields or from a portion of a single input field. Fabricating may also include performing a function as mentioned above.

A fourth type of transformation creates a sequence of output fields based on a sequence of input fields. For example, in the message above containing a customer and the associated orders, the output message may contain a sequence of orders each of which corresponds to an order in the input message. Further, performing a filtering operation to exclude some of the orders from the output might be necessary. A filtering condition specifies the criteria for selection of input data before it is considered for further processing. An exemplary filtering operation might select all orders whose total amount was over one hundred dollars.

A fifth type of transformation alters the structure of the data. In the customer example above, suppose it was desired to have multiple messages produced from the single customer message, where there is one output message per order. Such an output message would have fields related to both the customer and the order. More complicated structural transformations which are sometimes required will be discussed below.

Typically, the details of the semantic structure of the messages associated with an application are best understood by those who use those applications on a daily basis. In general, such persons are not programmers. Current transformation software allows non-programmers to use a graphical user interface (GUI) to handle some of the simpler cases. For example, a single field may be copied from the input to the output using "drag and drop." Drag and drop is a standard GUI technique where a mouse is used to select a field, visually carry (drag) it to another field, and then release (drop) it there.

However, programming (rather than GUI) techniques have been required when more complex transformations must be implemented such as the fourth and fifth types of transformations specified above. For example, to generate such transformations requires a method of specifying what is to occur for each unique transformation. A transformation must indicate the characteristics of the input data, the characteristics of the output data, filtering conditions for selecting input data, and the steps necessary to create the output data based on the input data. For each field of output, a sequence of steps must be defined to create that field. Both the steps to create the output data and the filtering conditions on the input data are often specified using "expressions." Expressions are defined in some sort of text based programming language (usually proprietary) that requires knowledge of programming to use.

A "general expression tree" is a tree that connects one or more expressions. Each expression returns a single value and takes zero or more parameters. The general expression tree consists of a root expression whose returned value is the result of executing the tree. Each of the children of the root is another expression, whose return value is a parameters for the root. This process is repeated for as many expressions as desired.

A "tree view" is a method for displaying a set of related objects that can be represented as a tree. This view is standard in modern graphical user interfaces for presenting things like files which are enclosed in folders (which may be in other folders, and so on). Generally, a tree view has mechanisms to move nodes from one tree to another tree (or another part of the same tree). Examples of the tree view are the Microsoft Windows Explorer and modem email programs that provide a way to contain mail messages in folders. Graphical presentations of tree views have methods to "drag and drop" a node from one place to another. Although graphical presentations are the most prevalent at the present state of the art, textual forms may be used to describe a tree view; and manipulation of those forms may be accomplished by cut, copy, and paste (or similar) techniques that provide ease of use and simplicity for the non-programmer.

As will be understood, the concepts for creating many transformations are quite complex. The creation of transformations is, consequently, a process that would be much easier if it could be handled entirely through a graphical interface or some other easily understandable interface.

There are some standards that define semantic transformation capabilities. However, all of these are text-based specifications that require training in programming to use. They are presented here in order to provide a basis for determining the capability of a transformation tool.

Object Query Language (OQL) is a specification that supports query (that is, finding data) and transformation of the results of the query. The transformation capabilities of OQL are quite powerful, allowing all of the types of transformations listed above. A complete transformation tool should be capable of any type of transformation that is expressible with OQL.

Extensible Stylesheet Language - Transformation (XSLT) is another relevant standard. This standard was originally developed as part of the XSL standard for creating HTML documents from XML documents. The transformation portions of the standard were generalized and separated into XSLT. XSLT is also powerful, although the level and amount of specification required to do more complex operations is more than that of OQL.

Because these standards are all text-based and require knowledge of programming techniques, it has been either impossible or cumbersome for the prior art to adapt them to a graphical interface usable by non-programmers. There are no transformation software tools that allow all of the desired capabilities completely within a graphical user interface (or some other interface that is easily understood and manipulated) such that a non-programmer can specify the transformations without having to write computer code of some sort. Because of the increasing need for data transformation, it is important that the people that have the best understanding of the semantics of the data, but lack special training in the art of programming, be able to perform complex transformations.

It is also important to provide a simplified programming environment by which transformations can more easily be created by those who are skilled at programming.

### Summary Of The Invention

It is, therefore, an object of the present invention to provide easily understood and manipulated methods which allow non-programmers to generate complex transformations.

This and other objects are accomplished in the present invention by A computer-implemented process for specifying instructions for transforming an input message into an output message comprising the steps of: generating an input schema tree for the input message, generating an output schema tree for the output message, and generating an expression tree from preconfigured expressions for a field of the output schema specifying instructions for transforming data from the input message to data for the output message.

These and other features of the invention will be better understood by reference to the detailed description which follows taken together with the drawings in which like elements are referred to by like designations throughout the several views.

### Brief Description Of The Drawings

Figure 1 is a diagram illustrating a tree in standard form.
Figure 2 is a diagram illustrating a tree in a form more suitable for use by a graphical user interface.
Figure 3 is a diagram representing an input schema and an output schema, an expression tree, and expression types utilized to generate transformations in accordance with the present invention.
Figure 4 is a diagram outline for implementing a process by which the steps necessary to produce an expression tree are defined in accordance with the present invention.

### Detailed Description

In this detailed description, the present invention will be described as it is carried out in a preferred graphical embodiment. Such an embodiment utilizes a graphical interface (GUI) and uses various well known techniques such as drag and drop developed to make manipulation of data and other elements easy for an unskilled user.

For example, a tree view is a common means of expressing hierarchical data in a graphical user interface. In the present invention, the tree view is used to express the input and output schemas, the possible function and constraint types, and the expression trees. The use of a tree view for the display of schemas and! expression types graphically is known; however, the use of the tree view for the creation, display, and manipulation of expression trees is new.

Even though a graphical embodiment is described, it will be recognized by those skilled in the art that the underlying process may be implemented by other interfaces designed to make manipulation by a relatively unskilled user a simple and intuitive process. For example, textual forms may be used to describe a tree; and manipulation of those forms may be accomplished by copy and paste (or similar) techniques that provide ease of use and simplicity for the non-programmer. Whenever a technique is described for use in a graphical interface, the description is intended to encompass use in these other forms of interfaces and will be apparent to those skilled in the art.

A first step that the user takes in providing a transformation in accordance with the present invention is to select the input and output schemas that will be utilized. Typically, each application program that is to be a source or a recipient of data utilizes a known format (schema) for presenting that data in a message. In accordance with the present invention, a database of those schemas that are expected to be utilized is prepared and provided. The database may index the schema by application program name and version. If a program provides a plurality of schema, further sub-catagorization may be provided. From these, a listing may be provided to the user from which selection of input schema and output schema may be accomplished.

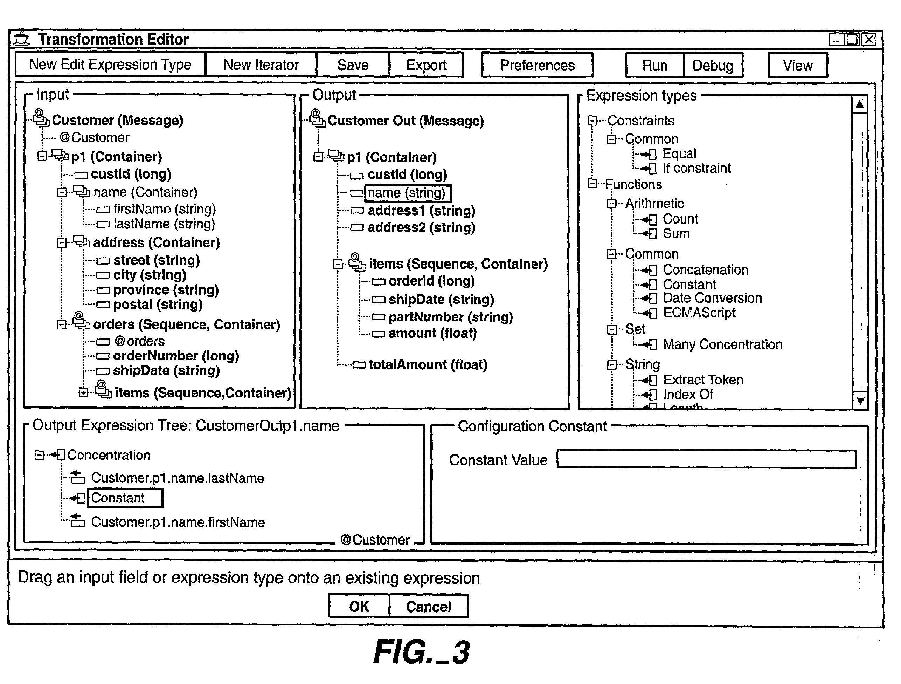

Selection of a particular application program or a sub-catagory under a program as input generates a tree representing an input schema. Selection of another application program or a sub-category under a program as output generates a tree representing an output schema. In one graphical embodiment of the present invention, these schema are displayed at the same time in a single window of a graphical user interface. Figure 3 illustrates in the upper left two panels input and output schema of two representative applications displayed in the same window. Depending on the embodiment, display may be in individual windows appearing on one or more output displays.

As may be seen in Figure 3, each of the input and output schema are represented in the tree view described above. Each tree begins at a root position that functions as a container. Below the root are arranged the various containers, sequences, and fields which represent the schema.

Once the input and output schema have been displayed in the graphical embodiment, an output field is selected to receive an expression tree that defines its content. In the figure, "name" is blackened to show that it has been selected.

For this selected output field, a transformation is then defined which defines the rules for building the particular output field from zero or more of the input fields. It is often true that many of the input fields require only to be copied to the output field and do not require further transformation. In this case, a simple drag from the input field to the output field forms an expression tree that copies the input to the output. An illustration is dragging "custId" from the input schema to the output schema in Figure 3. Those fields that require transformations will be apparent from differences in the input and output schema provided and from the user's requirements for the output data. For example, the input field references "firstName" and "lastName" require a transformation to produce the "name" field of the output schema in Figure 3.

When defining a transformation, the process for constructing each output field is defined. For each output field to be populated with data (it is permissible for an output field to be left empty), a set of rules to create that field is defined. These rules are built using "expressions." An expression is a set of computer code that takes as its input zero or more "parameters," manipulates those parameters in a manner specific to the type of the expression, and produces a single result. This result may be placed in an output field or may be a parameter to another expression. The parameters of an expression are other expressions. In order to define the rules for any particular transformation, an expression tree is constructed. Using this procedure, the following "expression tree" can be formed:

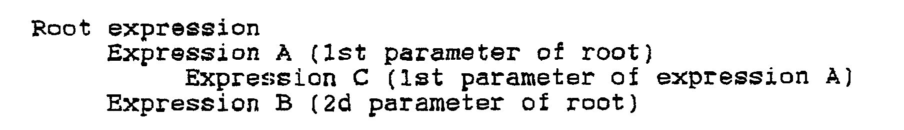

In the above example, the root expression has two parameters, expression A and B; and expression A has a single parameter that is expression C.

Each expression has a name that is used to identify that expression in the expression tree.

There are four categories of expressions for the purpose of this specification:
1) Field Reference - an expression that references a field from the input message. The value of the specified field is the result of the field reference. The name of the field reference is the fully qualified name of the input field. An example of a field reference is Customer.LastName that refers to the last name field of the customer container. A field reference is the only means of referencing data from the input message.
2) Function - an expression that returns a result, usually by manipulating its parameters. A function is an instance of some named function type that defines the behavior of the function. For example, a "concatenation" function returns the value of all of the parameters concatenated together. Another example is a "constant" function that takes no parameters and simply returns a constant value.
3) Formal Parameter - an expression that defines the existence of a named parameter for its parent function or constraint. The name of the formal parameter expression is the name of the parameter, which has its meaning relative to the parent function or constraint. For example a "subtract" function would have two formal parameters, one called "value," and the other called "subtrahend," where the subtrahend is subtracted from the value.
4) Constraint - an expression that returns only a true or false result based on the value of its parameters. Like a function, a constraint is an instance of some named constraint type that defines the behavior of the constraint. For example, an "equals" constraint takes two parameters and returns "true" if they are equal and "false" if they are not.

In order to carry out a graphical embodiment of the invention, each of the categories of expressions is displayed in a window of the output display in a manner such as that illustrated in Figure 3 of the drawing. In the GUI expression tree, each node is an expression and each node is identified with an icon showing the type of expression (function, constraint, formal parameter, or field reference), and a small amount of text describing the name of the expression and any relevant configuration information. The lower left hand panel of Figure 3 illustrates an expression tree.

Although an expression tree may be represented or specified in either a plain text format or constructed using programmatic interfaces, in a graphical embodiment of the invention, various drag and drop operations are defined between the trees. The techniques for defining these operations are well known to those skilled in the art of computer programming and will not be discussed further. It should be noted that many of these techniques have themselves been programmed to produce results by graphical manipulation. In one embodiment of the invention, the following graphical manipulations have been programmed using well known programming tools to produce the results described.
1) Dragging a field from the input schema to a field in the output schema produces an expression tree containing the field reference to the input field.
2) Dragging a container from the input to the output matches all of the enclosing fields in the input schema to the output schema by name, and has the same effect as if each of these fields was dragged as specified in item 1 above.
3) Dragging a function type to an output field creates an expression tree for that field which contains that expression type.
4) Dragging a constraint type to an input field creates the input constraint tree associated with that field's enclosing sequence.
5) Dragging an input field to an expression in the expression tree adds that input field as the last parameter of that expression.
6) Dragging an expression in the expression tree to another expression removes the dragged expression from its parent and adds the dragged expression as the last parameter to the expression that was dropped on.
7) Dragging a function or constraint type to an expression adds that function or constraint to the expression as the last parameter.

The expression tree is started by associating an initial function or field reference with an output field. In a graphical embodiment, this may be accomplished by dragging a copy of the function type or input field from its representation in a window of the display (such as that illustrated in Figure 3) and dropping the copy on the output field selected firom the output schema. If the initial expression is a function and it has parameters, additional functions and field references may be added for each of the parameters. Some functions (or constraints) may have a variable number of parameters, in which case any number of functions/field references may be added as parameters. Other functions/field references may have only certain parameters, where each parameter has a name; in this case, a formal parameter expression is automatically provided that identifies the required parameter's name.

Functions and constraints are defined as "expression types" which each has a globally unique name. For example, the function type named "/functions/common/concatenation" is the code necessary to concatenate multiple parameters. When this function type is added to a particular expression tree, it becomes a function that is also an expression. There is a simple application-programming interface that function/constraint types must implement. This allows new function/constraint types to be added by anyone skilled in the art of programming. The upper right hand side of Figure 3 is an example of expression types.

Each function or constraint type may have configuration information associated with it. This configuration information is filled in when the function/constraint type becomes part of an expression tree. The "constant" function, which returns a constant value provides a simple example of configuration information. Its configuration information is the constant value. An example of this is shown on the lower right hand side of figure 3. Function/constraint types can be implemented as components using available component standards (for example, the JavaBeans specification from Sun Microsystems); in this case the type of configuration information required can be specified declaratively, according to the rules associated with the component specification in use.

A field reference is the simplest expression, taking no parameters and returning the value of the specified input field. If the value of the output field is to be set directly from the value of an input field, the expression tree associated with the output field contains only a single field reference, referring to the input field (e.g., Customer.Orders.PartNumber). Every output field expression tree that references data from the input message must do so through the use of one or more field references.

A more complex transformation for an output field may be defined using a function. A function can have parameters, each of which may be a function, field reference or formal parameter. For example, using the schemas defined in Figure 3, an expression tree to form the output customer name from a concatenation of the last name, a comma, and the first name of the input name field, would have the following form:

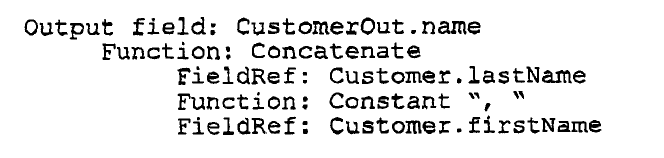

In the above example, the root of the expression tree is the concatenate function, whose result is therefore used to populate the CustomerOut.name field.

The above expression tree may be generated in the manner described above for a graphical interface in the following manner. The function concatenate may be dragged from its display position and dropped on the selected field CustomerOut. name. In the graphical embodiment, this will begin an expression tree under the customer name output field with the single expression. Then, the field "lastName" may be dragged from the input schema and dropped on the concatenate function of the output "name" field. A constant function with a comma value is next dragged from the function types and dropped on the concatenate function. Finally, the field "firstName" is dragged from the input schema and dropped on the concatenate function of the output name field.

A function or constraint may support either a variable or fixed number of parameters. If the function or constraint supports a fixed number of parameters, each parameter is a formal parameter expression whose name is the name of the parameter. The children of the formal parameter(s) are the actual parameter expressions, either a field reference or a function. If the function or constraint supports a variable number of parameters, the actual parameters are direct children of the function or constraint; formal parameters are not used. Here is an example of the use of a formal parameter of a multiply function. The configuration information associated with the function defines the multiplier as being .08. The formal parameter is the multiplicand that is a field reference to the total amount field.

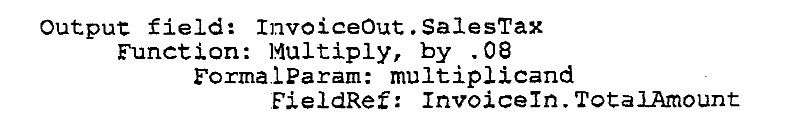

In this example, the function causes the input "Invoice.TotalAmount" to be multiplied by .08 to provide "InvoiceOut.SalesTax" in the output message.

Constraints are used to express conditional behavior. They can influence the execution of parts of the expression tree. In order to do this a constraint is associated with a function or field reference. Such a function or field reference is called a "constrained expression."

At most one constraint may be associated with the function or field reference. If the constraint returns true, the constrained expression behaves as if the constraint was not specified. If the constraint returns false, the constrained expression is said to return "no result". The handling of a "no result" return depends on the context. When "no result" is returned by a constrained expression that is a parameter of a formal parameter, the constrained expression is ignored; and the next parameter of the formal parameter is considered. If all of the parameters of a formal parameter return "no result", the formal parameter itself returns "no result".

If the constrained expression supports a variable number of parameters, only those that do not return "no result" are considered, the rest are ignored. The following example illustrates this point:

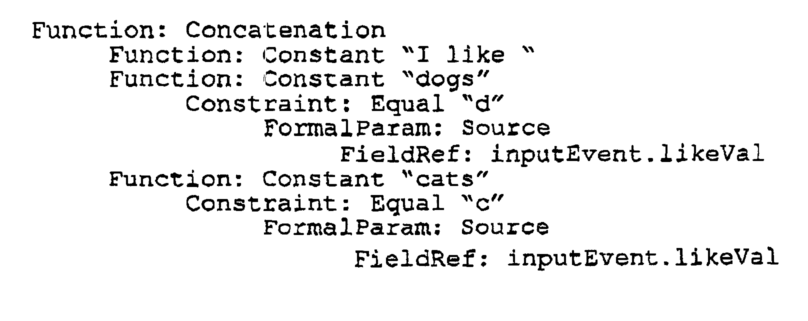

Here the Constant "dogs" and the Constant "cats" are the functions that are subject to the "no result" should their associated constraint evaluate to false. This results in "I like dogs" if the value of inputEvent.likeVal is "d", and "I like cats" if inputEvent.likeVal is "c", and "I like " if inputEvent.likeVal is neither "d" nor "c".

If the root expression returns "no result" then a null value is written to the output field. In the example above, "I like " is produced without more if both of the following parameters return "no result." An expression may treat a "no result" return in any way that suits it; if an expression receives a "no result" from one of its parameters and does not explicitly handle it, the expression itself returns "no result." An example of an expression providing special handling for "no result" is the "skip on no result" expression which discards the current output element from the lowest level sequence.

Each input sequence may be associated with a set of constraints that are used to control (filter) which elements of the sequence are to be considered for the output. For the purpose of the remainder of this description, we treat a message as a sequence. There are three categories of constraints any or all of which may be associated with each sequence.
1) The element of the sequence is dropped; if the sequence is the message, the message is dropped.
2) The entire message is dropped.
3) The entire message is treated as an error and sent to a separate error processing system (outside of the scope of the present invention).

If no constraints are specified or the constraint returns true, nothing is done; and the message or sequence element is accepted for further processing.

Since the above mentioned constraints are expressions, these are also the root of expression trees, i.e. each constraint takes parameters which can be other constraints, functions, or field references. With the use of simple constraints like "and" which returns the intersection of all of its parameters, and "or" which returns the union of all of its parameters, arbitrary expressions can be used for sequence filtering.

Here is an example is of an input constraint that accepts messages only for customers whose province field has the value of "PA".

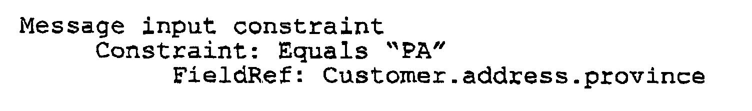

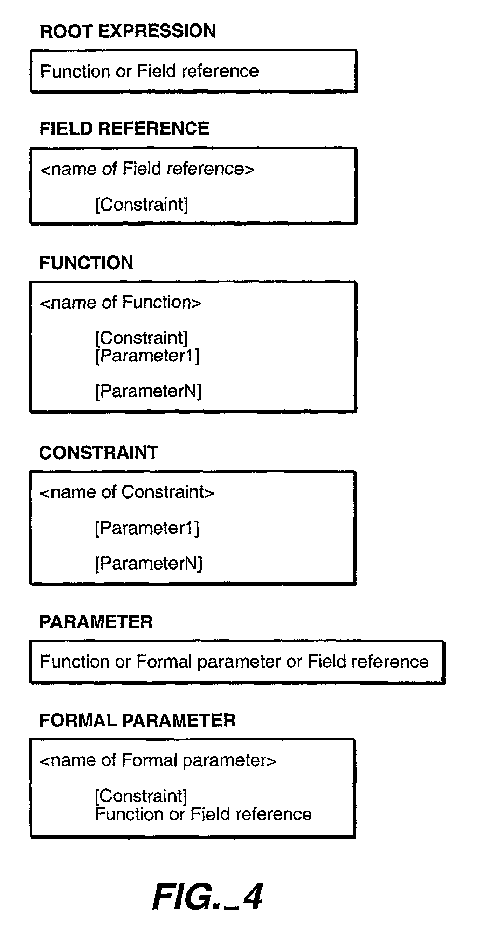

The present invention lends itself well to a programming environment which greatly simplifies the tasks by which a person adept at programming may generate expression trees. Figure 4 provides the outline for implementing a process by which the steps necessary to produce the expression tree are defined, regardless of which type of interface is used in the invention. By following each of the combinations of these steps, one can produce all of the legal expression trees and never produce an invalid one. This is a method of specifying the results associated with the expression tree precisely and unambiguously.

Having selected a field of the output schema which is to be produced, a programmer moves to the root box of the outline shown in Figure 4. In the root box, the programmer chooses one of the possible operations. The possible operations which may be accomplished from the root box are given as "function" or "field reference." Thus, the programmer chooses one of these to replace the root box. The choice depends on what is to be accomplished for that field. In the example described above in which first and last names from the input schema are concatenated to provide an output name field, the operation to be performed to generate the output field is the function type "concatenate." Consequently, the programmer goes to the box "function" and replaces the "<name of function>" with "concatenate," one of the function types provided by this invention.

The programmer then proceeds to the possible choices which follow in the function box; these are "constraint" and a plurality of "parameters." There are no constraints in the concatenation operation; however, there are three parameters involved in the particular concatenation operation. Consequently, the programmer proceeds to the "parameter" box which provides "function," "formal parameter," and "field reference" as choices. In this case, the parameter is the field reference "firstName" from the input schema. The programmer proceeds to the "field reference" box and replaces the "<name of field reference>" with "firstName." There are no constraints for the field reference, so this parameter is complete.

The programmer then returns to the function box to complete the remaining "parameters" for the concatenation function. The programmer again proceeds to the parameter box where "function" is chosen because the next parameter is the "constant" function type. This leads to the function box where the name of the function is replaced by "constant" and a comma "," is specified as a configuration property of this function. This completes the second parameter of the function.

The programmer returns to the function box to complete the last "parameter." This leads to the parameter box and then to the field reference box where the "<name of field reference>" is replaced by "lastName." This completes the programming necessary for generating an expression tree in accordance with the present invention. Those skilled in the programming art will recognize that this process will provide an expression tree which accurately represents the desired result in an easy and understandable manner. More importantly, this simple programming interface eliminates the chance of error so prevalent in programming.

Although the present invention has been described in terms of a preferred embodiment, it will be appreciated that various modifications and alterations might be made by those skilled in the art without departing from the spirit and scope of the invention. The invention should therefore be measured in terms of the claims which follow.

## Claims

1. A computer-implemented process for specifying instructions for transforming an input message into an output message comprising the steps of :
generating an input schema tree for the input message,
generating an output schema tree for the output message, and
generating an expression tree from pre-configured expressions for a field of the output schema specifying instructions for transforming data from the input message to data for the output message.

2. A process as claimed in Claim 1, in which the step of generating an expression tree comprises associating an expression from pre-configured expressions to specify instructions for the field of the output schema.

3. A process as claimed in Claim 1 or 2, in which the expression is a function.

4. A process as claimed in Claim 1, 2 or 3, in which the step of generating an expression tree further comprises associating a parameter with the function.

5. A process as claimed in Claim 4, in which the step of associating a parameter with the function comprises associating a function with the function.

6. A process as claimed in Claim 4, in which the step of associating a parameter with the function comprises associating a formal parameter with the function.

7. A process as claimed in Claim 4, in which the step of associating a parameter with the function comprises associating a field reference with the function.

8. A process as claimed in Claim 3, in which the step of generating an expression tree further comprises associating a constraint with the function.

9. A process as claimed in Claim 8, in which the step of associating a constraint with the function further comprises associating a parameter with the constraint.

10. A process as claimed in Claim 2, in which the expression is a field reference.

11. A process as claimed in Claim 10, in which the step of generating a tree view of an expression tree further comprises associating a constraint with the field reference.

12. A process as claimed in Claim 11, in which the step of associating a constraint with the field reference further comprises associating a parameter with the constraint.

13. A computer-implemented process as claimed in Claim 9 or 12, in which the step of associating a parameter with the constraint comprises associating a function with the constraint.

14. A computer-implemented process as claimed in Claim 9 or 12, in which the step of associating a parameter with the constraint comprises associating a formal parameter with the constraint.

15. A process as claimed in Claim 9 or 12, in which the step of associating a parameter with the constraint comprises associating a field reference with the constraint.

16. A computer-implemented process for specifying instructions for transforming an input message into an output message comprising the steps of :
generating a tree view of an input schema for the input message,
generating a tree view of an output schema for the output message, and
generating a tree view of a general expression tree for a field of the output schema specifying instructions for transforming data from the input message to data for the output message.

17. A process as claimed in Claim 16, in which the step of generating a tree view of a general expression tree comprises associating an expression from pre-configured expressions to specify instructions for the field of the output schema.

18. A process as claimed in Claim 17, in which the step of generating a tree view of a general expression tree further comprises associating a field reference from the input schema with an expression from the pre-configured expressions.

19. A process as claimed in Claim 18, in which the step of generating a tree view of a general expression tree further comprises associating constraints from pre-configured expressions with the field references form the input schema.

20. A process as claimed in Claim 18, in which the step of generating a tree view of a general expression tree further comprises associating an expression from pre-configured expressions with the field references from the input schema.

21. A process as claimed in any one of claims 16 to 20, in which the step of generating a tree view of a general expression tree comprises associating an expression from pre-configured expressions with fields of the input schema and the output schema using drag and drop techniques.

22. A process as claimed in Claim 21, in which the drag and drop techniques include pre-programmed processes by which dragging a field from the input schema to a field in the output schema produces an expression tree containing a field reference to the input field.

23. A process as claimed in Claim 21, in which the drag and drop techniques include pre-programmed processes by which dragging a container from the input schema to a field in the output schema matches enclosing fields in the input schema to the output schema by name and produces an expression tree containing a field reference to the input field.

24. A process as claimed in Claim 21, in which the drag and drop techniques include pre-programmed processes by which dragging a function type to an output field creates an expression tree for the output field which contains the expression type.

25. A process as claimed in Claim 21, in which the drag and drop techniques include pre-programmed processes by which dragging a constraint type to an input field creates an input constraint tree associated with the enclosing sequence of the input field.

26. A process as claimed in Claim 21, in which the drag and drop techniques include pre-programmed processes by which dragging an input field to an expression in the expression tree adds that input field as a last parameter of the expression.

27. A process as claimed in Claim 21, in which the drag and drop techniques include pre-programmed processes by which dragging a first expression in the expression tree to a second expression removes the first expression form a parent and adds the first expression as a last parameter to the second expression.

28. A process as claimed in Claim 21, in which the drag and drop techniques include pre-programmed processes by which dragging a function to an expression adds the function to the expression as a last parameter.

29. A process as claimed in Claim 21, in which the drag and drop techniques include pre-programmed processes by which dragging a constraint type to an expression adds the constraint type to the expression as a last parameter.

30. A computer program element comprising computer code means to make a computer execute a process as claimed in any one of Claims 1 to 29.

31. A computer program element as claimed in Claim 30 embodied on a computer readable medium.
